# EUROPEAN PATENT SPECIFICATION

(11) **EP 3 829 832 B1**
(45) Date of publication and mention of the grant of the patent: **28.01.2026**
(21) Application number: 19844854.0
(22) Date of filing: 02.08.2019
(51) Int. Cl.: A01D 34/00, A61K 38/00, G06Q 30/02

(54) **MOVING ROBOT, MOVING ROBOT SYSTEM, AND METHOD FOR MOVING TO CHARGING STATION OF MOVING ROBOT**
SICH BEWEGENDER ROBOTER, SICH BEWEGENDES ROBOTERSYSTEM UND VERFAHREN ZUM BEWEGEN EINES SICH BEWEGENDEN ROBOTERS ZUR LADESTATION
ROBOT MOBILE, SYSTÈME DE ROBOT MOBILE ET PROCÉDÉ POUR DÉPLACER UN ROBOT MOBILE VERS UNE STATION DE CHARGE

(30) Priority: 03.08.2018 US 201862714088 P; 30.04.2019 KR 20190050959
(43) Date of publication of application: 09.06.2021
(73) Proprietor: LG Electronics Inc., Seoul 07336 (KR)
(72) Inventor: KO, Kyoungsuk, Seoul 06772 (KR); KIM, Byungjin, Seoul 06772 (KR); LEE, Sungwook, Seoul 06772 (KR); LEE, Hyungsub, Seoul 06772 (KR); CHOI, Koh, Seoul 06772 (KR)
(74) Representative: Ter Meer Steinmeister & Partner
(86) International application number: PCT/KR2019/009643
(87) International publication number: WO 2020/027611

(56) References cited:
- WO-A1-2016/057140
- WO-A1-2018/132048
- CN-A- 106 171 248
- CN-A- 108 142 070
- CN-A- 108 307 767
- KR-A- 20040 063 248
- KR-A- 20160 133 348
- KR-B1- 100 664 043
- US-A1- 2015 032 320
- US-A1- 2016 100 522
- US-A1- 2016 174 459
- US-B2- 8 838 291
- US-B2- 9 740 204

## Description

### Technical Field

The present disclosure relates to a moving robot that autonomously travels, a moving robot system, and a method for moving to a charging station of the moving robot.

### Background Art

Generally, a moving robot is a device that automatically performs a predetermined operation while traveling by itself in a predetermined area without a user's operation. The moving robot senses obstacles installed in the predetermined area and performs its operations by moving close to or away from such obstacles.

Such a moving robot may include a cleaning robot that carries out cleaning while traveling in the predetermined area, as well as a lawn mower robot that mows a lawn on a bottom of the predetermined area. Generally, lawn mower devices include a riding-type device that moves according to a user's operation to cut a lawn or perform weeding when the user rides on the device, and a work-behind type or hand type device that is manually pushed or pulled by the user to move and cut a lawn. However, since the lawn mower devices move and cut a lawn according to direct operations by a user, the user may inconveniently operate the device directly. Accordingly, researches have been conducted on a moving robot-type mower device including elements that cuts a lawn. However, since a lawn mower robot operates outdoors as well as indoors, there is a need to set an area in which the lawn mower robot is to move. In detail, since an outdoor area is an open space unlike an indoor area, the area in which the lawn mower robot is to move needs to be designated in the outdoor area in advance, and the area needs to be limited so that the lawn mower robot travels in a place in which the lawn is planted.

As a prior art of the lawn mower device, the Korean Laid-Open Patent Publication No. 10-2015-0125508 (disclosed on Nov. 09, 2015) (hereinafter referred to as prior art document 1) discloses technology of burying a wire in a lawn-planted area to set an area in which the lawn mower robot is to move, to thereby control the moving robot to move in an inner area with reference to the wire. Then, a boundary for the moving robot is set based on a voltage value induced by the wire. However, although such a method for using a wire makes it easy to recognize a position of a boundary portion of a travel area and perform traveling, there is a limit in improving position recognition and traveling in a wide travel area within the boundary portion.
US 8 838 291 B2 discloses a method and a system for controlling a robotic garden tool around a working area in a boundary wire aided system. The system includes the robotic garden tool to perform an operation within the working area, which is at least partly defined by a boundary. The boundary separates the working area from a non-working area. The robotic garden tool also includes detecting means for detecting the boundary. Further, the robotic garden tool is adapted to receive a status signal sent from a signal source and the robotic garden tool is configured to stop the operation, when the status signal provides a stopping signal.

In addition, US Publication No. 2015-0125508 (published on November 9, 2017) (hereinafter referred to as prior art document 1) discloses technology of installing a plurality of beacons at a boundary portion of a travel area, determining a relative position of a robot with respect to the plurality of beacons, based on signals transmitted from the plurality of beacons while the robot is traveling along a boundary, and storing coordinate information and using the coordinate information to determine a position. That is, in prior art document 2, the robot transmits and receives signals with the plurality of beacons provided in the boundary portion of the travel area in a distributed manner, the travel area is set based on a result of the transmission and reception, and thus, accurate travel area/position recognition is performed using relative position information with respect to the plurality of beacons. Accordingly, a restriction on position recognition that was a limit in prior art document 1 may be partially resolved.

In addition, since a moving robot for lawn mowing operates outdoors instead of indoors, there may be many constraints in traveling. For example, due to characteristics of a wide open outdoor area, it may be difficult to search for a position of a charging station and accurately determine a position of the moving robot. This may lead to constraints on performance of communication between the charging station and the moving robot. Thus, it may become difficult to determine a position via the communication. In addition, due to various factors such as terrain/objects, it may become difficult to travel to return to the charging station.

In order to solve such a problem, such a method that the moving robot performs traveling until it finds a position of the charging station or reaches a boundary area in which a travel area may be recognized, and thus, determines a position of the charging station according to a result of the traveling, and then, returns to the charging station was proposed. However, this method had a limit in that it was difficult for the moving robot to quickly return to the charging station in a wide outdoor environment. For example, as time for returning to the charging station increased due to unnecessary traveling, there were concerns that driving power might be discharged before the moving robot returns to the charging station, that the moving robot becomes further away from the charging station while traveling to find a position of the charging station, or the like.

That is, generally, return travel of the moving robot to the charging station was not accurately/properly/easily performed. Accordingly, driving power of the moving robot was not easily charged. Due to these problems, operation performance of a lawn mower robot traveling in a wide outdoor environment was limited, and there was a limit in ensuring reliability, reliability, utilization, and effectiveness of the lawn mower robot.

### Disclosure of Invention

### Technical Problem

Therefore. an aspect of the present disclosure is to overcome limitations of the related art described above.

In detail, an aspect of the present disclosure is to provide a moving robot, a moving robot system, and a method for moving to a charging station of the moving robot using specifications of communication between the moving robot and the charging station.

Also, an aspect of the present disclosure is to provide a moving robot, a moving robot system, and a method for moving to a charging station of the moving robot, wherein the moving robot moves to the charging station via an optimum path to the charging station even under a specific communication condition, and accurately docks on the charging station.

In addition, an aspect of the present disclosure is to provide a moving robot, a moving robot system, and a method for moving to a charging station of the moving robot, wherein the moving robot may move to the charging station by determining a position of the charging station in all direction from the charging station.

Particularly, an aspect of the present disclosure is to provide a moving robot, a moving robot system, and a method for moving to a charging station of the moving robot, wherein the moving robot includes a plurality of communication modules, the charging station includes one communication module, and the moving robot may quickly and accurately move to the charging station via an optimum path to the charging station under a communication condition in which a reception angle of a signal may be determined.

In addition, an aspect of the present disclosure is to provide a moving robot, a moving robot system, and a method for moving to a charging station of the moving robot, whereby unnecessary traveling and time to move to the charging station may be reduced.

### Solution to Problem

In order to solve such problems described above, an aspect of the present disclosure is to provide a moving robot system according to claim 1 and a method of moving to a charging station of a moving robot according to claim 11. Preferred embodiments are provided in the dependent claims.

### Advantageous Effects of Invention

With respect to a moving robot, a moving robot system, and a method for moving the moving robot to a charging station according to the present disclosure, the moving robot moves to the charging station based on a result of receiving a transmission signal transmitted from the charging station and a result of sensing a state of a magnetic field at one point. Thus, the moving robot may determine a path for moving to the charging station and move to the charging station using specifications of communication between the moving robot and the charging station.

In particular, with respect to the moving robot, the moving robot system, and the method for moving to the charging station of the moving robot according to the present disclosure, a position of the charging station and a traveling direction for docking on the charging station are determined based on a plurality of results of receiving a transmission signal and a result of analyzing a state of a magnetic field. Thus, a path for moving to the charging station may be determined and the moving robot may move to the charging station in all directions from the charging station.

In addition, with respect to the moving robot, the moving robot system, and the method for moving to the charging station of the moving robot according to the present disclosure, the moving robot moves to and docks on the charging station by determining a position of the charging station and a traveling direction for docking on the charging station based on a plurality of results of receiving a transmission signal and a result of analyzing a state of a magnetic field. Thus, the moving robot may move to the charging station via an optimum path for moving to the charging station to thereby accurately dock on the charging station.

Accordingly, the moving robot, the moving robot system, and the method for moving to the charging station of the moving robot according to the present disclosure may have an effect of reducing unnecessary traveling and time for moving to the charging station. Thus, the moving robot may quickly and accurately move to the charging station via an optimum path to the charging station.

That is, the moving robot, the moving robot system, and the moving robot moving method according to the present disclosure may have such an effect that the moving robot may move to and dock on the charging station in all directions from the charging station accurately, quickly, appropriately, and efficiently.

As a result, the moving robot, the moving robot system, and the moving robot moving method according to the present disclosure may have effects of resolving limitations of the prior art, and enhancing accuracy, reliability, stability, applicability, efficiency, effectiveness, and utilization in the technical field of moving robots for lawn mowing in which a signal transmission element is utilized/adopted.

### Brief Description of Drawings

FIG. 1A is a configuration diagram (a) illustrating one embodiment of a moving robot and a moving robot system according to the present disclosure.
FIG. 1B is a diagram (a) illustrating a configuration of the moving robot according to the present disclosure.
FIG. 1C is a diagram (b) illustrating a configuration of the moving robot according to the present disclosure.
FIG. 1D is a diagram (c) illustrating a configuration of the moving robot according to the present disclosure.
FIG. 2 is a conceptual diagram illustrating an embodiment of a travel area of the moving robot according to the present disclosure.
FIG. 3A is a conceptual diagram illustrating a traveling principle of the moving robot and the moving robot system according to the present disclosure.
FIG. 3B is a conceptual diagram illustrating a signal flow between devices to determine positions of the moving robot and the moving robot system according to the present disclosure.
FIG. 4 is a detailed configuration diagram of the moving robot according to the present disclosure.
FIG. 5A is an exemplary view (a) for explaining an example of receiving a transmission signal according to an embodiment of the moving robot and the moving robot system according to the present disclosure.
FIG. 5B is an exemplary view (b) for explaining an example of receiving a transmission signal according to an embodiment of the moving robot and the moving robot system according to the present disclosure.
FIG. 5C is an exemplary view (c) for explaining an example of receiving a transmission signal according to an embodiment of the moving robot and the moving robot system according to the present disclosure.
FIG. 6A is an exemplary view (a) illustrating an example of a moving process according to an embodiment of the moving robot and the moving robot system according to the present disclosure.
FIG. 6B is an exemplary view (b) illustrating an example of a moving process according to an embodiment of the moving robot and the moving robot system according to the present disclosure.
FIG. 6C is an exemplary view (c) illustrating an example of a moving process according to an embodiment of the moving robot and the moving robot system according to the present disclosure.
FIG. 6D is an exemplary view (d) illustrating an example of a moving process according to an embodiment of the moving robot and the moving robot system according to the present disclosure.
FIG. 6E is an exemplary view (e) illustrating an example of a moving process according to an embodiment of the moving robot and the moving robot system according to the present disclosure.
FIG. 6F is an exemplary view (f) illustrating an example of a moving process according to an embodiment of the moving robot and the moving robot system according to the present disclosure.
FIG. 7 is a block diagram illustrating a moving process of the moving robot according to an embodiment of the moving robot system according to the present disclosure.
FIG. 8 is a flowchart illustrating a sequence for a method for moving to the charging station of the moving robot according to the present disclosure.

### Best Mode for Carrying out the Invention

Hereinafter, embodiments of a moving robot, a moving robot system, and a method for moving the moving robot to a charging station according the present disclosure will be described in detail with reference to the accompanying drawings, and the same reference numerals are used to designate the same/like components and redundant description thereof will be omitted.

In describing technologies disclosed in the present disclosure, if a detailed explanation for a related known function or construction is considered to unnecessarily divert the gist of the technologies in the present disclosure, such explanation has been omitted but would be understood by those skilled in the art. It should be noted that the attached drawings are provided to facilitate understanding of the technical idea disclosed in this specification, and should not be construed as limiting the technical idea by the attached drawings.

First, a moving robot 100 (hereinafter referred to as a robot) according to the present disclosure will be described.

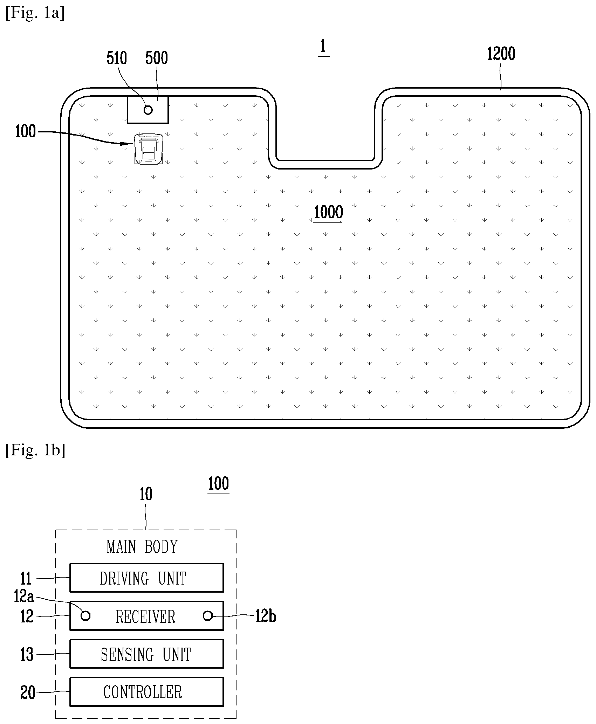

The robot 100 may refer to a robot capable of autonomous traveling, a lawn mowing moving robot, a lawn mower robot, a lawn mower device, or a moving robot for lawn mowing. As shown in FIG. 1A, the robot 100 travels in a travel area 1000 that is set, and cuts a lawn in the travel area 1000. The robot 100 may operate based on driving power charged by a charging station 500 provided in the travel area 1000 to thereby travel in the travel area 1000 and cut a lawn. When the robot 100 that operates based on driving power charged by the charging station 500 moves to the charging station 500 after traveling in the travel area 1000, the robot 100 may receive a transmission signal transmitted from a signal transmission modules 510 included in the charging station 500, and move to the charging station 500 based on a result of the reception of the transmission signal.

As shown in FIG. 1B, the robot 100 includes a main body 10, a driving unit 11, a receiver 12, a sensing unit 13, and a controller 20, wherein the driving unit 11 moves the main body 10, the receiver 12 includes a plurality of signal sensor modules 12a and 12b that receive the transmission signal transmitted from the charging station 500 in the travel area 1000, the sensing unit 13 senses a magnetic field state at a position in which the main body 10 is located, and the controller 20 controls traveling of the main body 10 by controlling the driving unit 11 so that the main body 10 travels in the travel area 1000, based on at least one selected from a result of the reception by the receiver 12, a result of the sensing by the sensing unit 13, and a prestored area map.

That is, in the robot 100, as the controller 20 controls the driving unit 11 so that the main body 10 travels in the travel area 1000 based on at least one selected from the result of the reception by the receiver 12, the result of the sensing by the sensing unit 13, and the prestored area map, the main body 10 travels in the travel area 1000.

In the robot 100 including the main body 10, the driving unit 11, the receiving unit 12, the sensing unit 13, and the controller 20, the controller 20 analyzes the sensing result at one point to which the main body 10 departs from the charging station 500 and moves by a predetermined distance, determines a direction in which the charging station 500 is located based on the reception result while the robot 100 is traveling in the travel area 1000, and thus, controls the main body 10 to return to the charging station 500 via the one point based on results of the analysis and the determination.

That is, when the robot 100 moves to the charging station 500 after traveling in the travel area 1000, the robot 100 may return to the charging station 500 via the one point based on the result of the analysis of the sensing result at the one point after the robot 100 departs from the charging station 500 and the result of the reception of the transmission signal while the robot 100 travels in the travel area 1000.

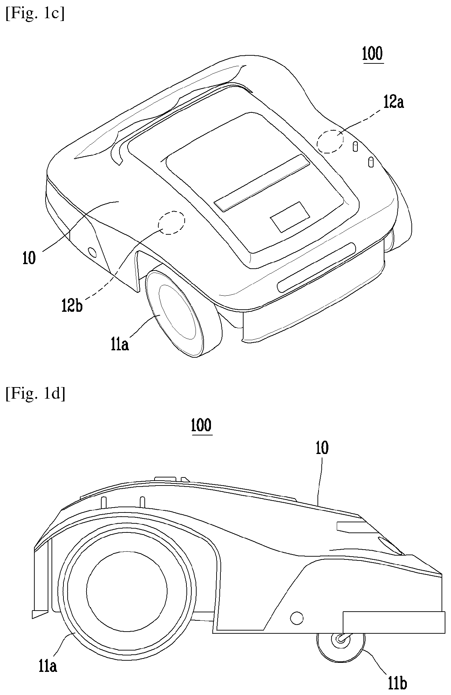

As shown in FIGS. 1C and 1D, the robot 100 may be an autonomous traveling robot including the main body 10 that is provided to be capable of moving and cutting a lawn. The main body 10 forms an outer shape of the robot 100 and includes one or more elements performing operations such as traveling of the robot 100 and cutting of a lawn. The main body 10 includes the driving unit 11 that may move the main body 10 in a desired direction and rotate the main body 10. The driving unit 11 may include a plurality of rotatable driving wheels. Each of the driving wheels may individually rotate so that the main body 10 may rotate in a desired direction. In detail, the driving unit 11 may include at least one main driving wheel 11a and an auxiliary wheel 11b. For example, the main body 10 may include two main driving wheels 11a, and the two main driving wheels 11a may be installed on a rear lower surface of the main body 10. The main body 10 may include the receiver 12. The receiver 12 may be included at both sides of the main body 10. The receiver 12 may include a plurality of signal sensor modules 12a and 12b that are provided at different positions and receive the transmission signal. That is, the receiver 12 may be configured to include the plurality of signal sensor modules 12a and 12b. For example, two signal modules 12a and 12b may be provided at both sides of the main body 10, respectively. Accordingly, the signal sensor modules 12a and 12b may receive the transmission signal at different positions, respectively.

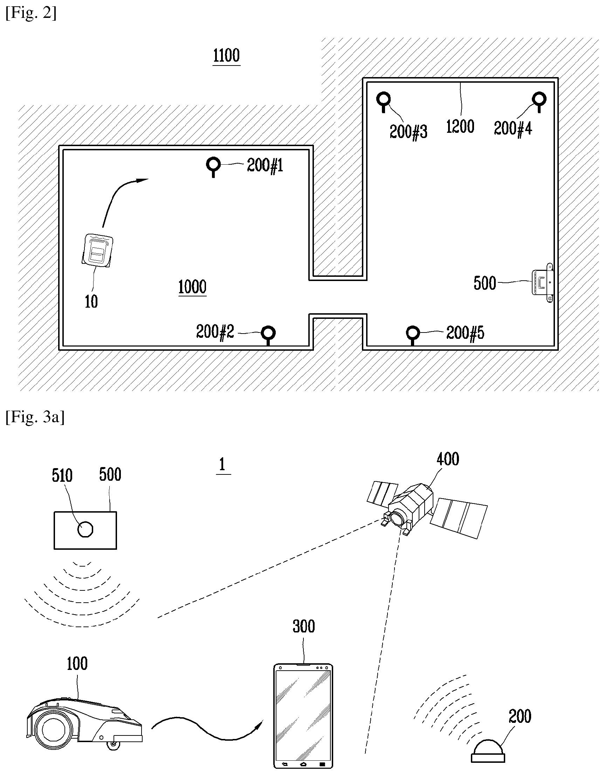

The robot 100 may travel by itself in the travel area 1000 shown in FIG. 2. The robot 100 may perform a particular operation during traveling. Here, the particular operation may be an operation of cutting a lawn in the travel area 1000. The travel area 1000 is an area corresponding to a target location in which the robot 100 is to travel and operate. A predetermined outside/outdoor area may be provided as the travel area 1000. For example, a garden, a yard, or the like in which the robot 100 is to cut a lawn may be provided as the travel area 1000. The charging station 500 for charging the robot 100 with driving power may be installed at one point of the travel area 1000. The robot 100 may be charged with the driving power by docking on the charging station 500 installed in the travel area 1000.

The travel area 1000 may be provided as a boundary area 1200 that is predetermined, as shown in FIG. 2. The boundary area 1200 corresponds to a boundary line between the travel area 1000 and an outside area 1100, and the robot 100 may travel in the boundary area 1200 not to deviate to the outside area 1100. In this case, the boundary area 1200 may be formed to have a closed curved shape or a closed loop shape. Also, in this case, the boundary area 1200 may be defined by a wire 1200 formed to have a shape of a closed curve or a closed loop. The wire 1200 may be installed in an arbitrary area. The robot 100 may travel in the travel area 1000 having a closed curved shape formed by the installed wire 1200.

As shown in FIG. 2, a transmitter 200 may be provided in the travel area 1000. At least one transmitter 200 may be provided in the travel area 1000. At least three transmitters 200 may be preferably provided in a distributed manner. The at least one transmitter 200 is a signal generation element configured to transmit a signal via which the robot 100 determines position information. The at least one transmitter 200 may be installed in the travel area 1000 in a distributed manner. The robot 100 may receive a signal transmitted from the transmitter 200 to thereby determine a present position of the robot 100 based on a result of the reception or determine position information regarding the travel area 1000. In this case, in the robot 100, the receiver 12 may receive the transmitted signal. The transmitter 200 may preferably be provided in a periphery of the boundary area 1200 of the travel area 1000. In this case, the robot 100 may determine the boundary area 1200 based on an arrangement position of the transmitter 200 in the periphery of the boundary area 1200. The transmitter 200 may include an inertial measurement unit (IMU) sensor that detects posture information of the transmitter 200. The IMU sensor is a sensor including at least one selected from a gyro sensor, an acceleration sensor, and an altitude sensor. The IMU sensor may be a sensor that senses posture information of the transmitter 200. Accordingly, the transmitter 200 may sense posture information of the transmitter 200 according to a present arrangement state via the IMU sensor. Further, when a posture is changed according to a change of a position, the transmitter 200 may sense the change of the posture according to the change of the position via the IMU sensor.

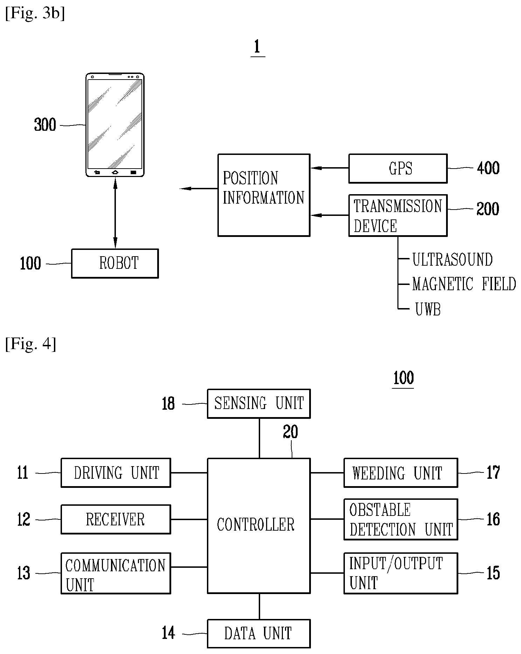

The robot 100 that travels in the travel area 1000 and cuts a lawn as shown in FIG. 2 may operate according to a traveling principle shown in FIG. 3A, and a signal may flow between devices for determining a position as shown in FIG. 3B.

As shown in FIG. 3A, the robot 100 may communicate with a terminal 300 moving in a predetermined area, and travel by following a position of the terminal 300 based on data received from the terminal 300. The robot 100 may set a virtual boundary in a predetermined area based on position information received from the terminal 300 or collected while the robots 100 is traveling by following the terminal 300, and set an internal area formed by the virtual boundary as the travel area 1000. When the boundary area 1200 and the travel area 1000 are set, the robot 100 may travel in the travel area 1000 not to deviate from the boundary area 1200. According to cases, the terminal 300 may set the boundary area 1200 and transmit the boundary area 1200 to the robot 100. When the terminal 300 changes or expands an area, the terminal 300 may transmit changed information to the robot 100 so that the robot 100 may travel in a new area. Also, the terminal 300 may display data received from the robot 100 on a screen and monitor operation of the robot 100.

The robot 100 or the terminal 300 may determine a present position by receiving position information. The robot 100 and the terminal 300 may determine a present position based on the transmission signal transmitted from the charging station 500 or a global positioning system (GPS) signal obtained using a GPS satellite 400. For example, a distance between the robot 100 and the charging station 500 may be measured based on a reception strength, a reception direction, reception time, or the like of the transmission signal. Then, based on this, a present position may be determined by determining a position of the charging station 500 in the travel area 1000. Alternatively, the GPS satellite 400 may receive a GPS signal transmitted from the GPS module in the charging station 500 and a present position of the charging station 500 is determined based on the GPS signal to thereby determine a present position.

In addition, when the transmitter 200 is provided in the travel area 1000, the robot 100 and the terminal 300 may determine a present position based on a signal for position information transmitted from the transmitter 200. Here, when signals are received from a plurality of transmitters 200, positions of the robot 100 and the plurality of transmitters 200 may be determined by comparing results of receiving the signals from the plurality of transmitters 200 with each other, respectively, to thereby determine positions of the robot 100 and the plurality of transmitters 200. Alternatively, a present position of the robot 100 may be determined by receiving a GPS signal transmitted from the GPS module included in the transmitter 200 and determining a position of the transmitter 200 based on the GPS signal. In addition, positions of the robot 100 and the plurality of transmitters 200 may be accurately determined by determining distances between the plurality of transmitters 200 based on respective positions of the plurality of transmitters 200. The robot 100 and the terminal 300 may preferably determine a present position by receiving signals transmitted from three transmitters 200 and comparing the signals with each other. That is, three or more transmitters 200 may be preferably provided in the travel area 1000.

The robot 100 sets one certain point in the travel area 1000 as a reference position, and then, calculates a position while the robot 100 is moving as a coordinate. For example, an initial starting position of the robot 100, that is, one of positions of the plurality of charging stations 500 may be set as a reference position. Alternatively, a position of one of the plurality of transmitters 200 may be set as a reference position to calculate a coordinate in the travel area 1000. The robot 100 may set an initial position of the robot 100 as a reference position in each operation, and then, determine a position of the robot 100 while the robot 100 is traveling. With reference to the reference position, the robot 100 may calculate a traveling distance based on rotation times and a rotational speed of the driving unit 11, a rotation direction of the main body 10, etc. to thereby determine a present position in the travel area 1000. Even when the robot 100 determines a position of the robot 100 using the GPS satellite 400, the robot 100 may determine the position using a certain point as a reference position.

As shown in FIG. 3B, the robot 100 may determine a present position based on position information transmitted from the GPS satellite 400 or the charging station 500. The position information may be transmitted in the form of a GPS signal, an ultrasound signal, an infrared signal, an electromagnetic signal, or an ultra-wideband (UWB) signal. A transmission signal transmitted from the charging station 500 may preferably be a UWB signal. That is, the transmission signal may be a UWB signal transmitted from a signal transmission module 510 in the charging station 500. Accordingly, the robot 100 may receive the UWB signal transmitted from the charging station 500, and determine a present position of the robot 100 based on the UWB signal. The charging station 500 may also include the GPS module to transmit a GPS signal. In this case, the GPS signal transmitted from the charging station 500 may be received by the GPS satellite 400. In addition, the GPS satellite 400 may transmit, to the robot 100, a result of receiving the GPS signal from the charging station 500.

As shown in FIG. 4, the robot 100 operating as described above includes the main body 10, the driving unit 11, the receiver 12, the sensing unit 13, and the controller 20, and travel in the travel area 1000 based on the result of the reception by the receiver 12, the result of the sensing by the sensing unit 13, and the prestored area map. Also, the robot 100 may further include at least one selected from a data unit 14, an input/ output unit 15, an obstacle detection unit 16, a weeding unit 17, and a communication unit 18.

The driving unit 11 is a driving wheel included in a lower part of the main body 10, and may be rotationally driven to move the main body 10. That is, the driving unit 11 may be driven so that the main body 10 travels in the travel area 1000. The driving unit 11 may include at least one driving motor to move the main body 10 so that the robot 100 travels. For example, the driving unit 11 may include a left wheel driving motor for rotating a left wheel and a right wheel driving motor for rotating a right wheel.

The driving unit 11 may transmit information about a driving result to the controller 20, and receive a control command for operation from the controller 20. The driving unit 11 may operate according to the control command received from the controller 20. That is, the driving unit 11 may be controlled by the controller 20.

The receiver 12 may include the plurality of signal sensor modules 12a and 12b that transmit and receive the transmission signal. The plurality of signal sensor modules 12a and 12b may be provided at different positions and receive the transmission signal from the charging station 500. The plurality of first and second signal sensor modules 12a and 12b may be provided in locations symmetrical to each other. For example, the plurality of first and second signal sensor modules 12a and 12b may be provided in locations symmetrical to each other at both sides of the main body 10. The plurality of first and second signal sensor modules 12a and 12b may transmit a signal to the charging station 500. When the charging station 500 transmits a signal using a method selected from an ultrasound method a UWB method, and an infrared method, the receiver 12 may include a sensor module that transmits and receives an ultrasound signal, a UWB signal, or an infrared signal, in correspondence with this. The receiver 12 may preferably include a UWB sensor. As a reference, UWB radio technology refers to technology using a very wide frequency range of several GHz or more in baseband instead of using a radio frequency (RF) carrier. UWB wireless technology uses very narrow pulses of several nanoseconds or several picoseconds. Since pulses emitted from such a UWB sensor are several nanoseconds or several picoseconds long, the pulses have good penetrability. Thus, even when there are obstacles in a periphery of the UWB sensor, the receiver 12 may receive very short pulses emitted by other UWB sensors.

When the robot 100 travels by following the terminal 300, the terminal 300 and the robot 100 include the UWB sensors, respectively, and thus, transmit or receive the UWB signals with each other through the UWB sensors. The terminal 300 may transmit the UWB signal to the robot 100 through the UWB sensor included in the terminal 300. The robot 100 may determine a position of the terminal 300 based on the UWB signal received through the UWB sensor, and thus, move by following the terminal 300. In this case, the terminal 300 operates as a transmitting side and the robot 100 operates as a receiving side. When the transmitter 200 includes the UWB sensor and transmits a signal, the robot 100 or the terminal 300 may receive the signal transmitted from the transmitter 200 through the UWB sensor included in the robot 100 or the terminal 300. At this time, a signaling method performed by the transmitter 200 may be identical to or different from signaling methods performed by the robot 100 and the terminal 300.

The receiver 12 may include a plurality of UWB sensors. That is, the plurality of signal sensor modules 12a and 12b may be UWB sensors. When two UWB sensors are included in the receiver 12, for example, provided on left and right sides of the main body 10, respectively, the two USB sensors may receive signals, respectively, and compare a plurality of received signals with each other to thereby calculate an accurate position. For example, according to a position of the robot 100, the charging station 500, or the terminal 300, when a distance measured by a left sensor is different from a distance measured by a right sensor, a relative position between the robot 100 and the charging station 500 or the terminal 300, and a direction of the robot 100 may be determined based on the measured distances.

The receiver 12 may transmit the reception result of the transmission signal to the controller 20, and receive a control command for operation from the controller 20. The receiver 12 may operate according to the control command received from the controller 20. That is, the receiver 12 may be controlled by the controller 20.

The sensing unit 13 may include at least one sensor that senses information about a posture and operation of the main body 10. The sensing unit 13 may include at least one sensor that senses a magnetic field state in a periphery of the main body 10. Here, the at least one sensor may include a magnetic field sensor. That is, the sensing unit 13 may include at least one magnetic field sensor to thereby sense a magnetic field state at a point in which the main body 10 is located. For example, the sensing unit 13 may sense at least one selected from a magnetic field direction and a magnetic field strength in a periphery of the body 10. The sensing unit 13 may further include at least one selected from an inclination sensor that detects movement of the main body 10 and a speed sensor that detects a driving speed of the driving unit 11. The inclination sensor may be a sensor that senses posture information of the main body 10. When the inclination sensor is inclined forward, backward, leftward or rightward against the main body 10, the inclination sensor may sense the posture information of the main body 10 by calculating an inclined direction and an inclination angle. A tilt sensor, an acceleration sensor, or the like may be used as the inclination sensor. In a case of the acceleration sensor, any of a gyro type sensor, an inertial type sensor, and a silicon semiconductor type sensor may be used. In addition, various sensors or devices capable of detecting movement of the main body 10 may be used. The sensing unit 13 including the inclination sensor may sense the magnetic field state through the tilt sensor. The speed sensor may be a sensor for sensing a driving speed of a driving wheel in the driving unit 11. When the driving wheel rotates, the speed sensor may sense the driving speed by detecting rotation of the driving wheel.

The sensing unit 13 may transmit information about a sensing result to the controller 20, and receive a control command for operation from the controller 20. The sensing unit 13 may operate according to a control command received from the controller 20. That is, the sensing unit 13 may be controlled by the controller 20.

The data unit 14 is a storage element that stores data readable by a micro processor, and may include a hard disk drive (HDD), a solid state disk (SSD), a silicon disk drive (SDD), a read only memory (ROM) a random access memory (RAM), CD-ROM, a magnetic tape, a floppy disk, or an optical data storage device. In the data unit 14, a received signal may be stored, reference data to determine an obstacle may be stored, and obstacle information regarding a detected obstacle may be stored. In the data unit 14, control data that controls operation of the robot 100, data according to an operation mode of the robot 100, collected position information, and information about the travel area 1000 and the boundary area 1200 may be stored.

The input/output unit 15 may include input elements such as at least one button, a switch, a touch pad, or the like, and output elements such as a display unit, a speaker, or the like to receive a user command and output an operation state of the robot 100.

The input/output unit 15 may transmit information about an operation state to the controller 20 and receive a control command for operation from the controller 20. The input/output unit 15 may operate according to a control command received from the controller 20. That is, the input/output unit 15 may be controlled by the controller 20.

The obstacle detection unit 16 includes a plurality of sensors to detect obstacles located in a traveling direction. The obstacle detection unit 16 may detect an obstacle located in front of the main body 10, that is, in a traveling direction of the main body 10 using at least one selected from a laser sensor, an ultrasonic sensor, an infrared sensor, and a three-dimensional (3D) sensor. The obstacle detection unit 16 may further include a cliff detection sensor installed on a rear surface of the main body 10 to detect a cliff.

In addition, the obstacle detection unit 16 may include a camera for detecting an obstacle by photographing a front. The camera is a digital camera, and may include an image sensor (not shown) and an image processing unit (not shown). The image sensor is a device that converts an optical image into an electrical signal. The image sensor includes a chip in which a plurality of photodiodes are integrated. A pixel may be an example of a photodiode. Charges are accumulated in respective pixels by an image formed on a chip by the light passing through the lens, and the charges accumulated in the respective pixels are converted into an electrical signal (for example, a voltage). A charge-coupled device (CCD) sensor and a complementary metal oxide semiconductor (CMOS) sensor are well known as image sensors. In addition, the camera may include an image processing unit (a digital signal processor (DSP)) for processing a captured image.

The obstacle detection unit 16 may transmit information about a result of the detection to the controller 20, and receive a control command for operation from the controller 20. The obstacle detection unit 16 may operate according to the control command received from the controller 20. That is, the obstacle detection unit 16 may be controlled by the controller 20.

The weeding unit 17 cuts grass on a bottom during traveling. The weeding unit 17 includes a brush or a blade that cuts a lawn, and may mow a law on the bottom through rotation.

The weeding unit 17 may transmit information about a result of operation to the controller 20 and receive a control command for operation from the controller 20. The weeding unit 17 may operate according to the control command received from the controller 20. That is, the weeding unit 17 may be controlled by the controller 20.

The communication unit 18 may communicate with a communication device that is to communicate with the robot 100, using a wireless communication method. For example, the communication unit 13 may communicate with at least one selected from the transmitter 200, the terminal 300, and the GPS satellite 400. The communication unit 18 is connected to a predetermined network and may communicate with an external server or the terminal 300 that controls the robot 100. When the communication unit 18 communicates with the terminal 300, the communication unit 18 may transmit a generated map to the terminal 300, receive a command from the terminal 300, and transmit data regarding an operation state of the robot 100 to the terminal 300. The communication unit 18 may include a communication module such as wireless fidelity (Wi-Fi), wireless broadband (WiBro), or the like, as well as a short-range wireless communication module such as Zigbee, Bluetooth, or the like, to transmit and receive data. The communication unit 18 may communicate with the GPS satellite 400 via the terminal 300 that communicates with the GPS satellite 400. In addition. the communication unit 18 may further include a GPS module that transmits or receives a GPS signal to/from the GPS satellite 400 to communicate with the GPS satellite 400. When the communication unit 18 communicates with the GPS satellite 400, the GPS satellite 400 may receive a GPS signal transmitted from at least one transmitter 200 or the charging station 500 provided in the travel area 1000, and transmit a result of the reception of the GPS signals to the communication unit 18. That is, when the communication unit 18 communicates with the GPS satellite 400 that receives a GPS signal from the transmitter 200 or the charging station 500, the communication unit 18 may receive the result of the reception of the GPS signal from the GPS satellite 400.

The communication unit 18 may transmit information about a result of the communication to the controller 20, and receive a control command for operation from the controller 20. The communication unit 18 may operate according to the control command received from the controller 20. That is, the communication unit 18 may be controlled by the controller 20.

The controller 20 may include a central processing unit to control all operations of the robot 100. The controller 20 may determine position information in the travel area 1000 via the receiver 12 and the sensing unit 13 to thereby control the main body 10 to travel in the travel area 1000 via the driving unit 11. The controller 20 may also control the main body 10 to travel in the travel area 1000, and control functions/operations to be performed via the data unit 14, the input/output unit 15, the obstacle detection unit 16, the weeding unit 17, and the communication unit 18.

The controller 20 may control input/output of data and control the driving unit 11 so that the main body 10 travels according to settings. The controller 20 may independently control operations of the left wheel driving motor and the right wheel driving motor by controlling the driving unit 11 to thereby control the main body 10 to travel rotationally or in a straight line.

The controller 20 may set the boundary area 1200 of the travel area 1000 based on position information received from the terminal 300 or position information determined based on the transmission signal received from the charging station 500. The controller 20 may also set the boundary area 1200 of the travel area 1000 based on position information that is collected by the controller 20 during traveling. The controller 20 may set, as the travel area 1000, a certain area in a region formed by the set boundary area 1200. The controller 20 may set the boundary area 1200 in a closed loop form by connecting discontinuous position information in a line or a curve, and set an inner area within the boundary area 1200 as the travel area 1000. When the travel area 1000 and the border area 1200 corresponding thereto are set, the controller 20 may control traveling of the main body 10 so that the main body 10 travels in the travel area 1000 and does not deviate from the set boundary area 1200. The controller 20 may determine a present position based on received position information and control the driving unit 11 so that the determined present position is located in the travel area 1000 to thereby control traveling of the main body 10.

In addition, according to obstacle information input by the obstacle detection unit 16, the controller 20 may control traveling of the main body 10 to avoid obstacles and travel. In this case, the controller 20 may reflect the obstacle information in prestored area information regarding the travel area 1000 to thereby modify the travel area 1000.

As the controller 10 determines a present position of the main body 10 based on at least one selected from the result of the reception by the receiver 12, the result of the sensing by the sensing unit 18, a result of the communication by the communication unit 18, and the prestored area map, and controls the driving unit 11 according to the determined present location so that the main body 10 travels in the travel area 1000. Thus, the main body 10 may travel in the travel area 1000 according to the determined position.

While the robot 100 travels in the travel area 1000 shown in FIG. 1A, the robot 100 may perform set operations. For example, while the robot 100 is traveling in the travel area 1000, the robot 100 may cut a lawn on a bottom of the travel area 1000.

In the robot 100, the main body 10 may travel according to driving of the driving unit 11. The main body 10 may travel as the driving unit 11 is driven to move the main body 10.

In the robot 100, the driving unit 11 may move the main body 10 according to driving of driving wheels. The driving unit 11 may move the main body 10 by driving the driving wheels so that the main body 10 may perform traveling.

In the robot 100, the receiver 12 may receive the transmission signals transmitted from the charging station 500 provided in the travel area 1000, while the robot 100 is traveling. The charging station 500 may include at least one signal transmission module 510, and transmit the transmission signal via the signal transmission module 510. The receiver 12 may include the plurality of signal sensor modules 12a and 12b that receive the transmission signal, and thus, receive the transmission signal. While the main body 10 is traveling in the travel area 1000, the receiver 12 may receive the transmission signal in real time. That is, the charging station 500 may transmit the transmission signal in real time, and the receiver 12 may receive the transmission signal in real time during traveling. Thus, the receiver 12 may receive the transmission signal each time when a position of the main body 10 is changed according to the traveling. Here, the transmission signal may be transmitted in a predetermined form. In addition, as the transmission signal is transmitted from a position in which the charging station 500 is provided, that is, from a fixed position of the charging station 500, a reception sensitivity of the transmission signal may vary depending on a position of the main body 10. That is, a reception result of the transmission signal may vary depending on positions in which the transmission signal is received, that is, a position of the main body 10, and the robot 100 may determine a present position of the main body 10 based on the transmission signal of which a reception result varies depending on reception positions of the transmission signal. For example, when the main body 10 travels from one point to another point, distances between the charging station 500 and the main body 10 are measured at the one point and the another point, respectively, based on the reception result obtained while the main body 10 travels from the one point to the another point, and it is determined that the main body 10 moved from the one point to the another point based on the measured distances. Thus, a present position of the main body 10 may be determined. In addition, since the plurality of signal sensor modules 12a and 12b receive the transmission signal at different positions, respectively, results of the reception by the plurality of signal sensor modules 12a and 12b may vary. Thus, a present position of the main body may be determined by comparing the respective results of the reception by the plurality of signals sensor modules 12a and 12b with each other.

In the robot 100, the sensing unit 13 may sense a magnetic field state at a position in which the main body 10 is located during traveling. The sensing unit 13 may sense a magnetic field state at a present position. The sensing unit 13 may sense at least one selected from a magnetic field direction and a magnetic field strength at a point in which the main body 10 is located during traveling. The sensing unit 13 may include at least one magnetic field sensor that senses at least one selected from a magnetic field direction and a magnetic field strength at a point in which the main body 10 is located to thereby sense the magnetic field state at a present position during traveling. The sensing unit 13 may sense the magnetic field state in real time during traveling. Accordingly, the sensing unit 13 may sense the magnetic field state at each point in a path of the travel area 1000 via which the main body 10 travels.

The controller 20 in the robot 100 may determine a position of the main body 10 based on at least one selected from the result of the reception by the receiver 12, the result of the sensing by the sensing unit 13, and the prestored area map during traveling, and control the driving unit 11 so that the main body 10 travels in the travel area 1000, to thereby control traveling of the main body 10. Here, the prestored area map is a map of the travel area 1000. An arrangement position of the charging station 500 and the boundary area 1200 may be designated on the prestored area map. The area map may be prestored in the robot 100. For example, the prestored area map may be prestored in the data unit 14. The prestored area map may be pre-generated according to at least one selected from a previous traveling history of the robot 100, a position of the charging station 500, and a user setting of the robot 100, and prestored in the robot 100. The controller 20 may measure a position of the charging station 500 and a distance between the main body 10 and the charging station 500 based on the reception result, and determine a present position of the main body 10 based on the measured distance. The controller 20 may determine magnetic field state information regarding a present position of the main body 10 based on the sensing result. By doing so, a particular point in the travel area 1000 may be searched/identified. For example, when the main body 10 is located at an x point, magnetic field state information at the x point may be determined and stored based on the sensing result at the x point, and the stored magnetic field state information is compared with a sensing result at a present position to thereby search/identify whether the present position corresponds to the x point. Accordingly, based on the sensing result, a position of the travel area 1000 may be determined or position information regarding the travel area 1000 may be converted into a coordinate. In addition, the controller 20 may measure a distance by which the main body 10 has traveled, based on at least one selected from the result of the sensing by the sensing unit 13 and the result of the communication by the communication unit 18, and determine a present position of the main body 10 based on the measured distance. The controller 20 may control driving of the driving unit 11 so that the main body 10 travels iWn the travel area 1000 according to the determined present position. That is, according to the determined present position, the controller 20 may control traveling of the main body 10 by controlling driving of the main body 10 so that the main body 10 does not deviate from the boundary area 1200. The controller 20 may also control operation of the main body 10 so that the main body 10 performs set operation.

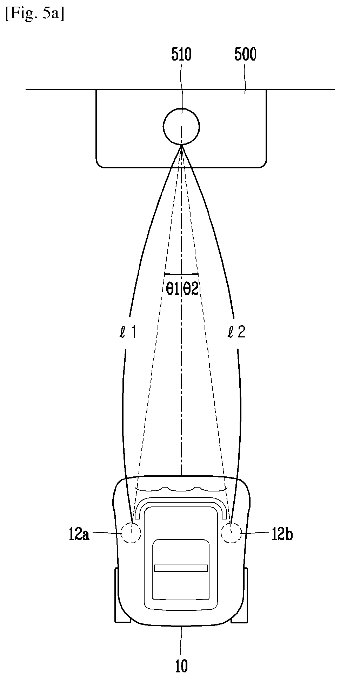

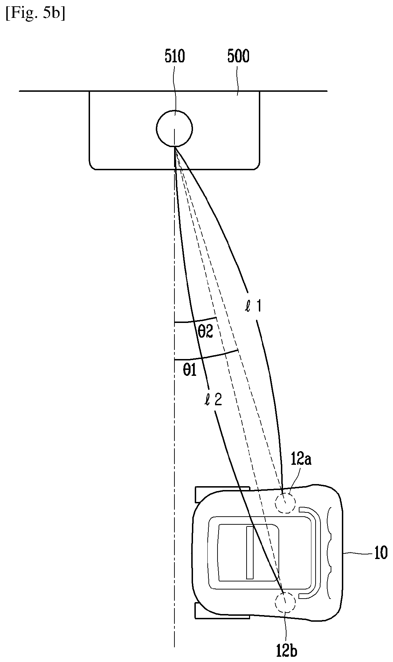

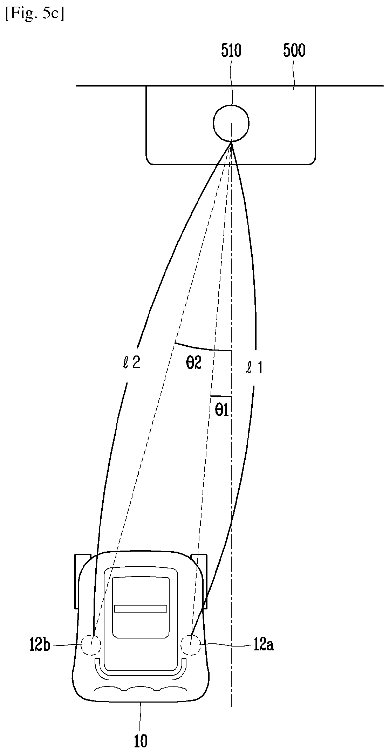

As such, the robot 100 including the driving unit 11, the receiver 12, the sensing unit 13 and the controller 20 may be configured such that the receiver 12 includes the plurality of signal sensor modules 12a and 12b to transmit or receive the transmission signal with one signal transmission module 510 included in the charging station 500. That is, the robot 100 may be configured in such an embodiment that the charging station 500 includes one signal transmission module 510 and transmits the transmission signal via the one signal transmission module 510, and the receiver 12 includes the plurality of signal sensor modules 12a and 12b and receives the transmission signal via each of the plurality of signal sensor modules 12a and 12b. Here, the plurality of signal sensor modules 12a and 12b may include a first signal sensor module 12a and a second sensor module 12b. Accordingly, the robot 100 may receive one transmission signal via the plurality of signal sensor modules 12a and 12b to thereby sense a strength and a transmission direction (a reception angle) of the one transmission signal. That is, the controller 20 may control traveling of the main body 10 so that the main body 10 moves to the charging station 500, by determining a direction in which the charging station 500 is located based on a result of the sensing of the strength and the transmission direction of the one transmission signal. For example, as shown in FIG. 5A, the first sensor module 12a and the second sensor module 12b are provided on left and right sides of the main body 10, respectively, and receive the one transmission signal transmitted from the signal transmission module 510 in the charging station 500 at different positions, respectively. Thus, a result of the receiving of, by the first signal sensor module 12a, the one transmission signal is different from a result of the reception of, by the second signal sensor module 12b, the one transmission signal. Accordingly, the reception result obtained by the first sensor module 12a is compared with the reception result obtained by the second sensor module 12b to thereby determine a position in which the one transmission signal is transmitted, that is, a direction in which the charging station 500 is located. Thus, the controller 20 may control the main body 10 to return to the charging station 500. In detail, in such a case that the first sensor module 12a provided on the left side of the main body 10 receives the one transmission signal from [a distance (strength) of 11 at an angle of θ1] and the second sensor module 12b provided on the right side of the main body 10 receives the one transmission signal from [a distance of 12 at an angle of θ2], when results of the reception by the first sensor module 12a and the second sensor module 12b, respectively, are compared with each other, a direction in which the one transmission signal is transmitted may be determined. Thus, traveling of the main body 10 may be controlled in the determined direction of the charged charging station 500 so that the main body 10 returns to the charging station 500. Particularly, as shown in FIGS. 5B and 5C, since the main body 10 is not positioned in a straight line with the charging station 500, when a result of reception by the first sensor module 12a is different from a result of reception by the second sensor module 12b, a direction in which the charging station 500 is located may be determined by comparing these different results with each other. That is, as the robot 100 receives one transmission signal from the plurality of first and second signal sensor modules 12a and 12b, the robot 100 may receive the one transmission signal in all directions from the main body 10. Accordingly, the robot 100 may determine a position of the charging station 500 regardless of a state of a traveling direction of the main body 10, and thus, the main body 10 may move to the charging station 500.

As such, the controller 20 that controls traveling of the main body 10 controls the main body 10 to depart from the charging station 500, travel in the travel area 1000, and then, move to the charging station 500. That is, the controller 20 may control the driving unit 11 so that the main body 10 departs from the charging station 500, travels in the travel area 1000, and then, return to the charging station 500.

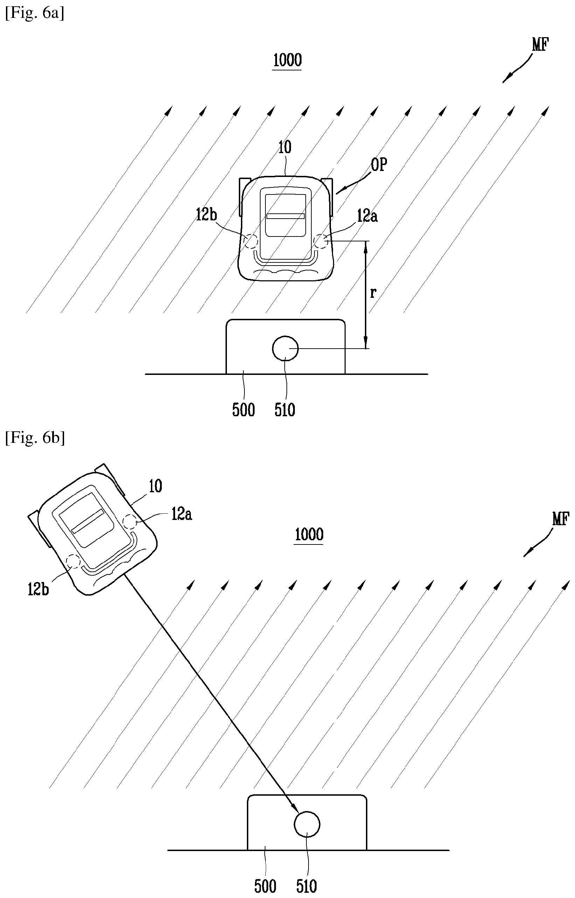

The controller 20 for controlling departure from the charging station 500 and return to the charging station 500 analyzes a result of sensing the magnetic field state at one point to which the main body 10 moves by a predetermined distance when departing from the charging station 500, determines a direction in which the charging station 500 is located based on a result of the reception, by the receiver 12, of the transmission signal while the robot 100 is traveling in the travel area 1000, and controls the main body 10 to return to the charging station 500 via the one point based on results of the analysis and the determination. That is, the controller 20 may control the main body 10 to return to the charging station 500 via the one point based on the analysis result of the sensing result with respect to the magnetic field state, and the determination result of the direction in which the charging station 500 is located. As such, the robot 100 for returning to the charging station 500 based on the analysis result and the determination result may depart from the charging station 500 and return to the charging station 500 in an order shown in FIGS. 6A to 6F.

As shown in FIG. 6A, when the main body 10 departs from the charging station 500, the controller 20 may control the main body 10 to move backward from the charging station 500 by a predetermined r, and thus, be located at the one point OP when the main body 10 is directed toward the charging station 500. In such a case that the main body 10 departs from the charging station 500, the controller 20 may control the main body 10 to move backward for the predetermined distance r when the main body 10 is docking on the charging station 500, that is, when a traveling direction of the main body 10 is directed toward the charging station 500, and thus, be located at the one point OP apart from the charging station 500 by the predetermined distance r. After the main body 10 is located at the one point OP, the sensing unit 13 may sense the magnetic field state. That is, the magnetic field state at the one point OP may be sensed.

The controller 20 may analyze a direction of a magnetic field MF according to the traveling direction of the main body 10 from a result of the sensing at the one point OP. That is, the controller 20 may analyze a direction of the magnetic field MF when the main body 10 departs backwards from the charging station 500 and the traveling direction of the main body 10 is directed toward the charging station 500. The controller 20 may analyze the sensing result. and then, store the sensing result and a result of the analysis of the sensing result. Based on the analysis result, the controller 20 may generate and store coordinate information regarding the one point OP. For example, the coordinate information of the one point OP may be set to (0, y). Alternatively, the coordinate information including a magnetic field state at the one point OP or the direction of the magnetic field MF at the one point OP may be generated and stored. By doing so, after the main body 10 travels in the travel area 1000, the main body 10 may return to the one point OP based on the analysis information. For example, the sensing result obtained when the main body 10 moves to the one point OP is compared with the analysis result. According to the analysis result, that is, as a point that matches the direction of the magnetic field MF at the one point OP is checked, the main body 10 may move to the one point OP. Then, the controller 20 may control the traveling of the main body 10 so that the main body 10 travels in the travel area 1000. That is, as shown in FIG. 6A, the controller 20 may control the main body 10 to depart from the charging station 500, analyze the sensing result, and then, control the main body 10 to travel in the travel area 100.

While the main body 10 is traveling in the travel area 1000, the controller 20 may check a direction in which a reception angle of the transmission signal corresponds to a predetermined criterion based on the reception result. Then, the controller 20 may determine the checked direction as the direction in which the charging station 500 is located. For example, as shown in FIG. 6B, a direction in which angles of the transmission signal received by the first sensor module 12a and the second sensor module 12b at the present position, respectively, are 0 degrees, or a direction in which a difference between the angles of the transmission signal received by the first sensor module 12a and the second sensor module 12b, respectively, is less than a predetermined criterion may be determined as a direction in which the charging station 500 is located.

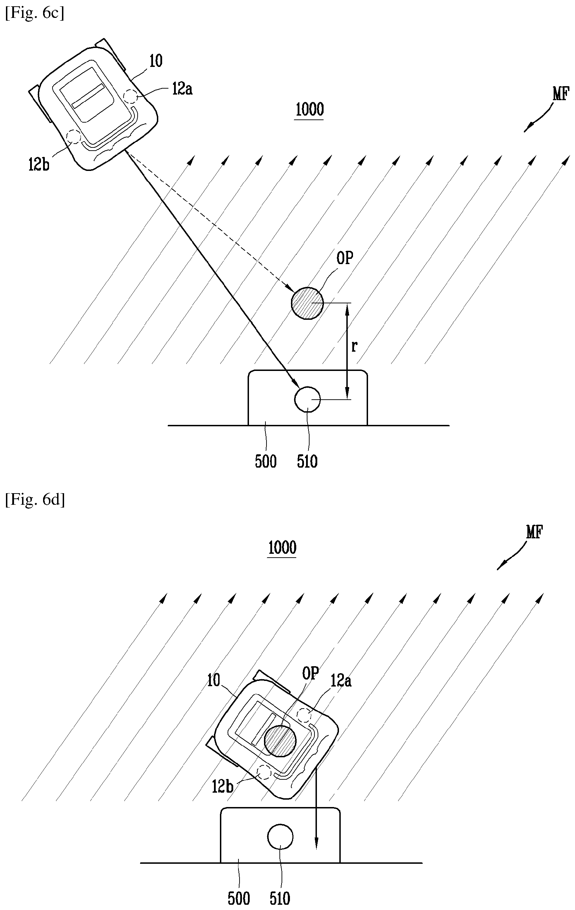

When the controller 20 controls the main body 10 to return to the charging station 500, the controller 20 may control the main body 10 to move to the one point OP based on the analysis result and the determination result, and return to the charging station 500 from the one point OP. In this case, as shown in FIG. 6C, the controller 20 may switch the traveling direction of the main body 10 to the direction in which the charging station 500 is located based on the determination result, and control the main body 10 to move to the one point OP and return to the charging station 500, based on the analysis result. That is, when the main body 10 returns to the charging station 500 after traveling in the traveling area 1000, the controller 20 may switch the traveling direction of the main body 10 to the direction in which the charging station 500 is located as shown in FIG. 6C, by determining the direction in which the charging station 500 is located based on the reception result. Then, based on the analysis result obtained after the main body 10 departs from the charging station 500, when the traveling direction is switched to the direction in which the charging station 500 is located, the controller 20 may control the main body 10 to move to the one point OP so that the main body 10 is located at the one point OP as shown in FIG. 6D.

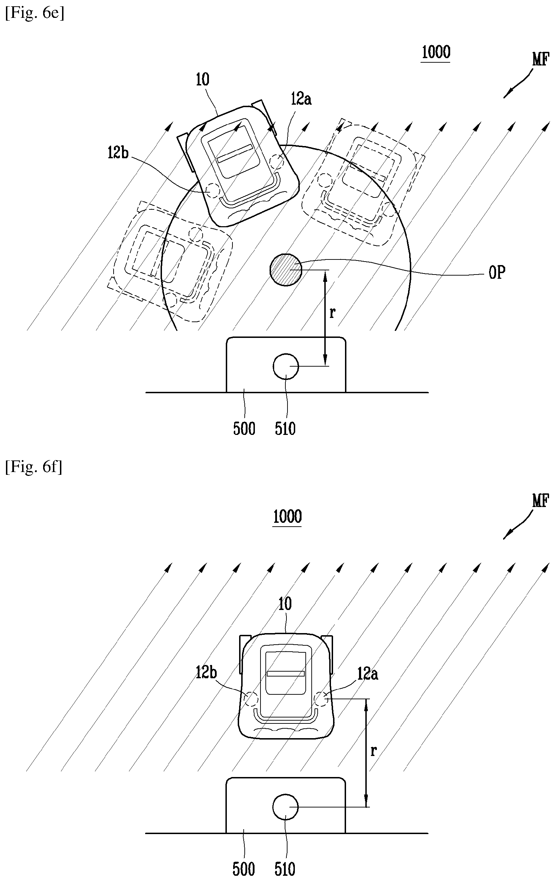

The controller 20 may control the main body 10 to move to the one point OP based on the analysis result and return to the charging station 500 by switching the traveling direction to a direction in which the charging station 500 is located at the one point OP. When the controller 20 controls the main body 10 to move to the one point OP, while the main body 10 is moving to the one point OP, the controller 20 may compare the sensing result with the analysis result, and then, control the main body 10 to be located at the one point OP according to a result of the comparison. In this case, while the main body 10 is moving to the one point OP, the controller 20 may check a point where the sensing result corresponds to the analysis result, that is, a point where the sensing result matches a direction of the magnetic field MF at the one point OP, and then, control the main body 10 to move to the one point OP as shown in FIG. 6D. For example, as shown in FIG. 6E, after the main body 10 arrives in a vicinity of the one point OP, the controller 20 finds a point where the sensing result matches the analysis result, that is, a point in which the sensing result matches a direction of the magnetic field MF at the one point OP by comparing the sensing result with the analysis result at each point. Then, the main body 10 moves to the point where the sensing result matches the analysis result, and thus, the main body 10 may be located at the one point OP as shown in FIG. 6D. That is, the controller 20 may control the main body 10 to move to the point where the sensing result matches the analysis result, and thus, movement to the one point OP and a position of the main body 10 may be corrected. After the main body 10 moves to the one point OP as shown in FIG. 6D, the controller 20 may control the main body 10 to return to the charging station 500 by switching the traveling direction to the direction in which the charging station 500 is located as shown in FIG. 6F. Accordingly, as the traveling direction of the main body 10 is directed toward a front of the charging station 500, the main body 10 may dock on the front of the charging station 500. In this case, the controller 20 may control the main body 10 to move by the predetermined distance r for which the main body 10 moved when the main body 10 departed from the charging station 500.

As such, as the controller 20 controls traveling of the main body 10 based on the result of the reception by the receiver 12 and the result of the reception by the sensing unit 13, the main body 10 may depart from the charging station 500, and then, return to the charging station 500 as shown in a process shown in FIGS. 6A to 6E. That is, the robot 100 may move and return to the charging station 500 based on the state of the magnetic field analyzed when the robot 100 departed from the charging station 500.

The above-described embodiments of the robot 100 may be applied to a moving robot system and a method for moving to a charging station of the moving robot that will be described below. In addition, embodiments of the moving robot system and the method for moving to a charging station of the moving robot may be also applied to the robot 100.

Hereinafter, a moving robot system 1 (hereinafter referred to as a system) according to the present disclosure will be described.

As shown in FIG. 1A, the system 1 is a system including the robot 100 and the charging station 500, wherein the robot 100 cuts a lawn in the travel area 1000 and the charging station 500 communicates with the robot 100 and charges the robot 100 with driving power in the charging system 500. The system 1 may be applied to all systems including the charging station 500 and the robot 100. Here, the robot 100 may be the robot 100 described above. That is, the system 1 may be a traveling/control/operation system of a lawn mower robot that cuts a lawn in the travel area 1000.

The system 1 includes the charging station 500 and the robot 100, wherein the charging station 500 is provided in the travel area 1000 and transmits a transmission signal for determining position information, and the robot 100 travels in the travel area 1000 based on at least one selected from a result of receiving the transmission signal, a result of sensing a state of a magnetic field, and a prestored area map. Here, the transmission signal may be UWB signals of which a reception result varies depending on a receiving position. That is, in the system 1, the charging station 500 and the robot 100 may transmit and receive the transmission signal that is a UWB signal.

In the system 1, at least one charging station 500 may be provided in the travel area 1000. The charging station 500 may charge driving power in the robot 100. The charging station 500 may be a station where the robot 100 waits for traveling. Accordingly, before the robot 100 starts traveling or after the robot 100 finishes traveling, the robot 100 may dock on the charging station 500 to wait for traveling and be charged by the driving power.

The charging station 500 may communicate with the robot 100 via the transmission signal. The charging station 500 may include at least one transmission module 510, and transmit the transmission signal to the robot 100 via the first signal transmission module 510. In an embodiment of the system 1 according to the present disclosure, the charging station 500 may include the one signal transmission module 510 to thereby transmit the transmission signal to the robot 100 via the one signal transmission module 510. The charging station 500 may transmit the transmission signal to the robot 100 while the robot 100 is traveling. While the robot 100 is traveling in the travel area 1000, the charging station 500 may transmit the transmission signal to the robot 100 in real time. That is, the charging station 500 may transmit the transmission signal to the robot 100 in real time. Then, the robot 100 may receive the transmission signal in real time during traveling to receive the transmission signal each time when a position of the robot 100 is changed according to the traveling. Here, the transmission signal may be transmitted in a predetermined form.

In the system 1, the robot 100 may operate based on driving power charged by the charging station 500 provided in the travel area 1000, and thus, travel in the travel area 1000 and cut a lawn. As shown in FIG. 1B, the robot 100 may include the main body 10, the driving unit 11, the receiver 12, the sensing unit 13, and the controller 20, wherein the driving unit 11 moves the main body 10, the receiver 12 includes the plurality of signal sensor module 12a and 12b to receive the transmission signal from the charging station 500 in the travel area 1000, the sensing unit 13 senses a magnetic field state at a position where the main body 10 is located, and the controller 20 controls traveling of the main body 10 by controlling the driving unit 11 so that the main body 10 travels in the travel area 1000, based on at least one selected from the result of the reception by the receiver 12, the result of the sensing by the sensing unit 13, and the prestored area map. That is, as the controller 20 controls the driving unit 11 so that the robot 100 travels in the travel area 1000, based on at least one selected from the result of the reception by the receiver 12, the result of the sensing by the sensing unit 13, and the preset area map, the robot 100 may travel in the travel area 1000.

The robot 100 may communicate with the charging station 500 using the transmission signal. The robot 100 may include the plurality of signal sensor modules 12a and 12b to thereby receive the transmission signal via the plurality of signal sensor modules 12a and 12b, respectively. The plurality of signal sensor modules 12a and 12b may be provided in positions symmetrical to each other and each transmit the transmission signal. For example, the plurality of signal sensor modules 12a and 12b may be provided at the left and right sides of the robot 100, respectively, and receive the transmission signal at different positions. In an embodiment of the system 1 according to the present disclosure, the robot 100 may include two signal sensor modules 12a and 12b, and transmit the transmission signal via each of the plurality of signal sensor modules 12a and 12b. The robot 100 may receive the transmission signal from the charging station 500 while the robot 100 is traveling. While the robot 100 is traveling in the travel area 1000, the robot 100 may receive the transmission signal in real time. That is, the charging station 500 may transmit the transmission signal to the robot 100 in real time, and the robot 100 may receive the transmission signal in real time during traveling to thereby receive the transmission signal each time when a position of the robot 100 is changed according to the traveling. Here, as the transmission signal is transmitted from a position in which the charging station 500 is provided, that is, from a fixed position, a reception sensitivity of the transmission signal may vary depending on a position of the robot 100. That is, a result of the reception of the transmission signal may vary depending on a position in which the transmission signal is received, that is, a position of the main body 100. The robot 100 may determine a present position based on the transmission signal of which reception result varies depending on reception positions of the transmission signal. For example, when the robot 100 travels from one point to another point, a present position of the robot 100 may be determined by measuring distances from the one point and the another point of the robot 100 to the charging station 500, respectively, based on the result of the reception of the transmission signal while the robot 100 travels from the one point to the another point, and then, determining that the robot 100 moved from the one point to the another point based on the measured distances.

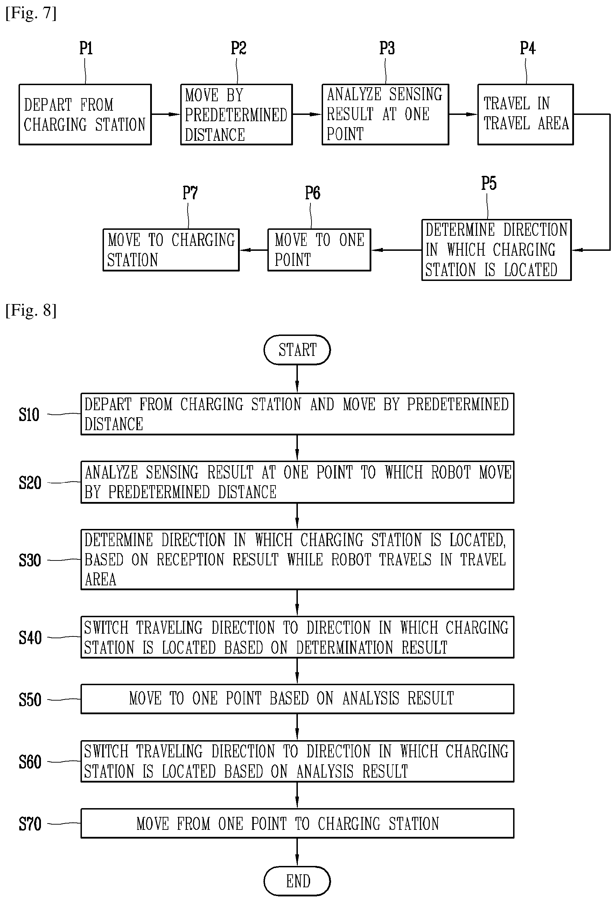

As shown in FIG. 7, the robot 100 in the system 1 departs from the charging station 500 (P1) and analyzes the sensing result at the one point OP (P3) to which the robot 100 moves by the predetermined distance r (P2). Then, while the robot 100 travels in the travel area 1000 (P4), the robot 100 determines a direction in which the charging station 500 is located based on the reception result (P5), moves to the one point OP based on a result of the analysis and a result of the determination (P6), and thus, returns from the one point OP to the charging station 500 (P7). That is, in the system 1, when the robot 100 moves to the charging station 500 after traveling in the travel area 1000, the robot 100 may return to the charging station 500 via the one point OP based on the analysis result of the sensing result at the one point during the traveling in the travel area 1000 and the reception result of the transmission signal after the robot 100 departed from the charging station 500.

The charging station 500 may include at least one signal transmission module 510, and transmit the transmission signal via the signal transmission module 510. The robot 100 may include the plurality of signal sensor modules 12a and 12b to thereby receive the transmission signal, wherein the plurality of signal sensor modules 12a and 12b are provided in positions symmetrical to each other and may each receive the transmission signal. The plurality of signal sensor modules 12a and 12b may include the first sensor module 12a provided on the left side of the main body 10 and the second sensor module 12b provided on the right side of the main body 10 to thereby receive the transmission signal at both sides of the main body 10. Accordingly, as shown in FIGS. 5A to 5C, as the robot 100 receives one transmission signal via the first sensor module 12a and the second sensor module 12b, the robot 100 may sense strength and a reception angle of the transmission signal. That is, the robot 100 may move to the charging station 500 based on a result of the sensing of the strength and the reception angle of the transmission signal received while the robot 100 is traveling in the travel area 1000.

A process shown in FIG. 7 in which the robot 100 departs from the charging station 500 and returns to the charging station 500 may be performed in an order shown in FIGS. 6A and 6F.

When the robot 100 departs from the charging station 500 (P1), the robot 100 may move backward from the charging station 500 by a predetermined distance r (P2) as shown in FIG. 6A and be located at the one point OP when the robot 100 is directed toward the charging station 500. In such a case that the robot 100 departs from the charging station 500 (P1), the robot 100 may move backward for the predetermined distance r (P2) when the robot 100 dock on the charging station 500, that is, a traveling direction of the robot 100 is directed toward the charging station 500, and thus, be located at the one point OP apart from the charging station 500 by the predetermined distance r. After the robot 100 is positioned at the one point OP, the robot 100 may sense the magnetic field state. That is, the magnetic field state at the one point OP may be sensed.

The robot 100 may analyze a direction of the magnetic field MF (P3) according to the traveling direction of the main body 10 from a result of the sensing at the one point OP. That is, the robot 100 may analyze the direction of the magnetic field MF (P3) when the robot 100 departs backwards from the charging station 500 (P1 and P2) and the traveling direction of the robot 100 is directed toward the charging station 500. The robot 100 may analyze the sensing result (P3), and then, store the sensing result and a result of the analysis of the sensing result. In addition, based on the analysis result, the robot 100 may generate and store coordinate information regarding the one point OP. For example, the coordinate information of the one point OP may be set to (0, y). Alternatively, the coordinate information including a state of the magnetic field at the one point OP or a direction of the magnetic field MF at the one point OP may be generated and stored. Thus, after the main body 10 travels in the travel area 1000, the main body 10 may return to the one point OP based on the analysis information. For example, the sensing result obtained when the main body moves to the one point OP is compared with the analysis result. Thus, according to the analysis result, that is, as a point that matches the direction of the magnetic field MF at the one point OP is checked, the robot 100 may move to the one point OP. Then, the robot 100 may travel in the travel area 1000 (P4). That is, as shown in FIG. 6A, the robot 100 may depart from the charging station 500, analyze the sensing result, and then, travel in the travel area 1000 (P4).

While the robot 100 is traveling in the travel area 1000 (P4), the robot 100 may check a direction in which a reception angle of the transmission signal corresponds to a predetermined criterion based on the reception result to thereby determine the checked direction as a direction in which the charging station 500 is located (P5). For example, as shown in FIG. 6B, a direction in which angles of the transmission signal received by the first sensor module 12a and the second sensor module 12b at the present position, respectively, are 0 degrees, or a direction in which a difference between the angles of the transmission signal received by the first sensor module 12a and the second sensor module 12b, respectively, is less than a predetermined criterion may be determined as a direction in which the charging station 500 is located.

When the robot 100 returns to the charging station 500, the robot 100 moves to the one point OP (P6) based on a result of the analysis and a result of the determination, and thus, return to the charging station 50 from the one point OP (P7). In this case, as shown in FIG. 6C, the robot 100 may switch the traveling direction to the direction in which the charging station 500 is located based on the determination result (P5), move to the point OP (P6) based on the analysis result, and return to the charging station 500 (P7). That is, when the robot 100 returns to the charging station 500 after traveling in the travel area 1000, the robot 100 may determine the direction in which the charging station 500 is located based on the reception result (P5), switch the traveling direction to the direction in which the charging station 500 is located as shown in FIG. 6C. Then, when the traveling direction is switched to the direction in which the charging station 500 is located based on the analysis result obtained after the robot 100 departs from the charging station 500, the robot 100 may move to the one point OP (P6) to be thereby located at the one point OP as shown in FIG. 6D.

The robot 100 may move to the one point OP based on the analysis result (P6), and switch the traveling direction to the direction in which the charging station 500 is located (P7) at the one point OP to thereby return to the charging station (P7). When the robot 100 moves to the one point OP (P6), the robot 100 may compare the sensing result with the analysis result while the robot 100 is moving to the one point OP, and thus, be located at the one point OP (P6) according to a result of the comparison. In this case, while the main body 10 is moving to the one point OP, the robot 100 may check a point where the sensing result corresponds to the analysis result, that is, a point where the sensing result matches a direction of the magnetic field MF at the one point OP, and thus, move to the one point OP as shown in FIG. 6D. For example, as shown in FIG. 6E, after the robot 100 reaches a vicinity of the one point OP, the robot 100 compares the comparison result with the sensing result at each point, finds a point where the sensing result matches the analysis result, that is, a point in which the sensing result matches a direction of the magnetic field MF at the one point OP, and then, moves to the point where the sensing result matches the analysis result. Thus, as shown in FIG. 6D, the robot 100 may be located at the one point OP (P6). That is, as the robot 100 moves to a point where the sensing result matches the analysis result, movement to the one point OP and a position of the main body 10 may be corrected. After the robot 100 moves to the one point OP (P6) as shown in FIG. 6D, the robot 100 may move to the one point OP (P6), and switch the traveling direction to the direction in which the charging station 500 is located to thereby return to the charging station 500 (P7). Accordingly, as the traveling direction of the main body 10 is directed toward a front of the charging station 500, the main body 10 may dock on the front of the charging station 500. In this case, the robot 100 may move by the predetermined distance r for which the robot 100 moved when the robot 100 departed from the charging station 500.

As such, the system 1 for returning to the charging station 500 based on the reception result and the sensing result may depart from the charging station 500 and return to the charging station 500 in a process shown in FIGS. 6A to 6F. That is, the robot 100 may move and return to the charging station 500 based on the magnetic field state analyzed when the robot 100 departed from the charging station 500.

The above-described embodiments of the system 1 may be applied to the moving robot described above and a method for moving to a charging station of the moving robot which is to be described below. In addition, embodiments of the moving robot and the method for moving a charging station of the moving robot may be applied to the system 1.

Hereinafter, a method for moving to a charging station of the moving robot according to the present disclosure (hereinafter referred to as a moving method) will be described.

The moving method is a method for moving, by the robot 100 shown in FIGS. 1B to 1D and included in the system 1 of FIG. 1A, to the charging station 500. The moving method may be applied to the robot 100 and the system 1.

The moving method may be a method for controlling movement of the robot 100 in the system 1.

The moving method may be a control method performed by the controller 20 included in the robot 100.

As shown in FIG. 1B, the moving method is a method for moving, by the robot 100, to the charging station 500 in an order shown in FIGS. 6A to 6F, wherein the robot 100 may include the main body 10, the driving unit 11, the receiver 12, the sensing unit 13, and the controller 20 as shown in FIG. 1B, wherein the driving unit moves the main body 10, the receiver 12 includes the plurality of signal sensor module 12a and 12b to receive the transmission signal from the charging station 500 in the travel area 1000, the sensing unit 13 senses a magnetic field state at a position in which the main body 10 is located, and the controller 20 controls traveling of the main body 10 by controlling the driving unit 11 so that the main body 10 travels in the travel area 1000, based on at least one selected from a result of the reception by the receiver 12, a result of the sensing by the sensing unit 13, and the prestored area map. The moving method may be applied to a method for controlling, by the controller 20, traveling of the robot 100 or a method for moving, by the robot 100 in the system 1, to the charging station 500.

As shown in FIG. 8, the moving method includes departing from the charging station 500 and moving by the predetermined distance r (S10), analyzing the sensing result at the one point OP to which the robot 100 moved by the predetermined distance r (S20), determining a direction in which the charging station 500 is located based on the reception result while the robot 100 travels in the travel area 1000 (S30), switching the traveling direction to a direction in which the charging station 500 is located based on a result of the determination (S40), moving to the one point OP based on a result of the analysis (S50), switching the traveling direction to the direction in which the charging station 500 is located based on the analysis result (S60), and moving from the one point OP to the charging station 500 (S70).

That is, the robot 100 may return to the charging station 500 in an order from the moving by the predetermined distance r (S10), the analyzing of the sensing result (S20), the determining of the direction in which the charging station 500 is located (S30), the switching of the traveling direction to the direction in which the one point OP is located, based on a result of the determination (S40), the moving to the one point OP (S50), the switching of the traveling direction to the direction in which the charging station 500 is located, based on a result of the analysis (S60), and the moving to the charging station 500 (S70).

In the moving by the predetermined distance r (S10), the robot 100 may start traveling by departing from the charging station 500 when the robot 100 docks on the charging station 500.

In the moving for the predetermined distance r (S10), the robot 100 may move backward from the charging station 500 by the predetermined distance r, and thus, be located at the one point OP when the robot 100 is directed toward the charging station 500, as shown in FIG. 6A.

That is, in the moving for the predetermined distance r (S10), the robot 100 may move backward by the predetermined distance r when the robot 100 docks on the charging station 500, that is, when a traveling direction is directed toward the charging station 500. Thus, the robot 100 may be located at the one point OP apart from the charging station 500 by the predetermined distance r.

In the analysis of the sensing result (S20), the robot 100 may arrive at the one point OP, sense the magnetic field state, and analyze a result of sensing the magnetic field state at the one point OP.

In the analysis of the sensing result (S20), the robot 100 may analyze a direction of the magnetic field MF according to a traveling direction of the main body 10, from the sensing result at the one point OP.

That is, in the analysis of the sensing result (S20), the robot 100 may depart from the charging station 500 by moving backward and analyzes a direction of the magnetic field MF when the traveling direction is directed toward the charging station 500.

In the determining of the direction in which the charging unit 500 is positioned (S30), as it is determined that the robot 100 is to return to the charging station 500 while the robot 100 travels in the travel area 1000, a direction in which the charging station 500 is located may be determined based on a result of receiving the transmission signal while the robot 100 is traveling in the travel area 1000.

In the determining of the direction in which the one point OP (S30), a direction in which a reception angle of the transmission signal corresponds to a predetermined criterion based on the reception result is checked, the checked direction may be determined as the direction in which the charging station 500 is located.

For example, in the determining of the direction in which the charging station 500 is located (S30), a direction in which reception angles of the transmission signals received by the first sensor module 12a and the second sensor module 12b at the current position, respectively, are 0 degrees, or a direction in which a difference between the reception angles of the transmission signals received by the first sensor module 12a and the second sensor module 12b, respectively, is less than a predetermined criterion may be determined as a direction in which the charging station 500 is located.

In the switching of the traveling direction to the direction in which the charging station 500 is located based on a result of the determination (S40), a traveling direction may be switched to the direction in which the charging station 500 is located, the direction being determined by the robot 100 based on the reception result..

In the switching of the traveling direction to the direction in which the charging station 500 is located based on the determination result (S40), as shown in FIG. 6C, the robot 100 may switch the traveling direction to the direction in which the charging station 500 is located, based on the determination result.

In the moving to the one point OP (S50). the robot 100 may move to the one point OP based on a result of the analysis performed after the robot 100 departs from the charging station 500.

In the moving to the one point OP (S50), as shown in FIG. 6C, when the traveling direction is switched to the direction in which the charging station 500 is located, the robot 100 may move to the one point OP when the traveling direction is switched to the one point OP, and thus, be located to the one point OP as shown in FIG. 6D.

In the moving to the one point OP (S50), the sensing result may be compared with the analysis result while the robot 100 is moving to the one point OP, and thus, the robot 100 may be located at the one point OP according to a result of the comparison.

In the moving to the one point OP (S50), when the robot 100 moves to the one point OP, the robot 100 may move to the one point OP by checking a point where the sensing result corresponds to the analysis result, that is, a point where the sensing result matches the direction of the magnetic field MF at the one point OP.

In the moving to the one point OP (S50), as shown in FIG. 6E, after the robot 100 arrives at a vicinity of the one point OP, the robot 100 finds a point where the sensing result matches the analysis result, that is, a point where the sensing result matches a direction of the magnetic field MF at the one point OP, through comparison of the sensing result with the analysis result at each point. Then, the robot 100 may move to the point where the sensing result matches the analysis result, and thus. be located at the one point OP.

In the switching of the traveling direction to the direction in which the charging station 500 is located based on the analysis result (S50), the robot 100 may switch the traveling direction to the direction in which the charging station 500 is located, after the robot 100 is located at the one point OP.

In the switching of the traveling direction to the direction in which the charging station 500 is located (S60), as shown in FIG. 6F, the robot 100 may switch the traveling direction to the direction in which the charging station 500 is located so that the traveling direction is directed to the front of the charging station 500.

In the moving to the charging station 500 (S70), the robot 100 may move from the one point OP to the charging station 500.

In the moving to the charging station 500 (S70), the robot 100 may move by the predetermined distance r and thus return to the charging station 500, when the traveling direction of the robot 100 is directed to the front of the charging station 500.

The moving method can be implemented as computer-readable codes on a programrecorded medium, wherein the moving method includes the moving by the predetermined distance (S10), the analyzing of the sensing result (S20), the determining of the direction in which the charging station 500 is located (S30), the switching of the traveling direction to the direction in which the one point OP is located, based on a result of the determination (S40), the moving to the one point OP (S50), the switching of the traveling direction to the direction in which the charging station 500 is located, based on a result of the analysis (S60), and the moving to the charging station 500 (S70). The computer readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and may also be implemented in the form of a carrier wave (e.g., transmission over the Internet). In addition, the computer may also include the controller 20.

While the present disclosure has been particularly shown and described with reference to embodiments thereof, it will be understood that various changes in form and details may be made therein without departing from the scope of the claims.

## Claims

1. A moving robot system (1) comprising
a charging station (500) that is provided in a travel area and is configured to transmit a transmission signal for determining position information; and
a moving robot (100) comprising:
a main body (10);
a driving unit (11) that is configured to move the main body (10);
a receiver (12) comprising a plurality of signal sensor modules (12a, 12b) that are configured to receive a transmission signal transmitted from a charging station (500) disposed in a travel area;
a sensing unit (13) that is configured to sense a state of a magnetic field at a point where the main body (10) is located; and
a controller (20) that is configured to control traveling of the main body (10) by controlling the driving unit (11) so that the main body (10) travels in the travel area, based on at least one selected from a result of the reception by the receiver (12), a result of the sensing by the sensing unit (13), and a prestored area map,
wherein the controller (20) is configured to analyze the sensing result at one point to which the main body (10) departs from the charging station (500) and moves by a predetermined distance, and to determine a direction in which the charging station (500) is located based on the reception result while the main body (10) travels in the travel area, and to control the main body (10) to return to the charging station (500) via the one point based on a result of the analysis and a result of the determination,
wherein the controller (20), when the controller (20) controls the main body (10) to return to the charging station (500), is configured to control the main body (10) to move to the one point and return from the one point to the charging station (500), based on the analysis result and the determination result, and
wherein the controller (20) is configured to switch the traveling direction of the main body (10) to the direction in which the charging station (500) is located based on the determination result, and to control the main body (10) to move to the one point and return to the charging station (500) based on the analysis result.

2. The moving robot system (1) of claim 1, wherein the plurality of signal sensor modules (12a, 12b) is provided in different positions.

3. The moving robot system (1) of claim 2, wherein the plurality of signal sensor modules (12a, 12b) is provided in positions symmetrical to each other.

4. The moving robot system (1) of claim 1, wherein the sensing unit (13) is configured to comprise at least one sensor that senses at least one selected from a direction of the magnetic field and strength of the magnetic field at the point where the main body (10) is located.

5. The moving robot system (1) of claim 4, wherein the at least one sensor comprises a magnetic field sensor.

6. The moving robot system (1) of claim 1, wherein the controller (20) is configured to control the main body (10) to move backward by the predetermined distance from the charging station (500), and thus, be located at the one point in such a state that the main body (10) is directed to the charging station (500), when the main body (10) departs from the charging station (500).

7. The moving robot system (1) of claim 1, wherein the controller (20) is configured to analyze a direction of the magnetic field according to a traveling direction of the main body (10), from the sensing result at the one point.

8. The moving robot system (1) of claim 1, wherein the controller (20) is configured to check a direction in which a reception angle of the transmission signal corresponds to a predetermined criterion based on the reception result while the main body (10) is traveling in the travel area, and the checked direction is determined as the direction in which the charging station (500) is located.

9. The moving robot system (1) of claim 1, wherein the controller (20) is configured to control the main body (10) to move to the one point based on the analysis result, and return to the charging station (500) by switching the traveling direction to the direction in which the charging station (500) is located at the one point.

10. The moving robot system (1) of claim 9, wherein the controller (20), when the controller (20) controls the main body (10) to move to the one point, is configured to compare the sensing result with the analysis result while the main body (10) is moving to the one point, and to control the main body (10) to be located at the one point according to a result of the comparison.

11. A method of moving to a charging station (500) of a moving robot (100), wherein the moving robot (100) comprises: a main body (10); a driving unit (11) that moves the main body (10); a receiver (12) comprising a plurality of signal sensor modules (12a, 12b) that receive a transmission signal transmitted from a charging station (500) disposed in a travel area; a sensing unit (13) that senses a state of a magnetic field at a point where the main body (10) is located; and a controller (20) that controls traveling of the main body (10) by controlling the driving unit (11) so that the main body (10) travels in the travel area, based on at least one selected from a result of the reception by the receiver (12), a result of the sensing by the sensing unit (13), and a prestored area map,
the method comprising:
moving (S10) by a predetermined distance by departing from the charging station (500);
analyzing (S20) the sensing result at one point to which the main body (10) moves by the predetermined distance;
determining (S30) a direction in which the charging station (500) is located based on the reception result while the main body (10) is traveling in the travel area;
switching (S40) a traveling direction to the direction in which the charging station (500) is located based on a result of the determination;
moving (S50) to the one point based on a result of the analysis of the sensing result;
switching (S60) the traveling direction to the direction in which the charging station (500) is located based on the analysis result; and
moving (S70) from the one point to the charging station (500).

12. The method of claim 11, wherein the moving (S50) to the one point comprises comparing the sensing result with the analysis result while the main body (10) is moving to the one point, and moving to the one point according to a result of the comparison.

## Patentansprüche

1. System (1) eines sich bewegenden Roboters, das Folgendes umfasst:
eine Ladestation (500), die in einem Fahrbereich vorgesehen ist und konfiguriert ist, ein Übertragungssignal zum Bestimmen von Positionsinformationen zu übertragen; und
einen sich bewegenden Roboter (100), der Folgendes umfasst:
einen Hauptkörper (10);
eine Antriebseinheit (11), die konfiguriert ist, den Hauptkörper (10) zu bewegen;
eine Empfangsvorrichtung (12), die mehrere Signalsensormodule (12a, 12b) umfasst, die konfiguriert sind, ein Übertragungssignal zu empfangen, das von einer Ladestation (500) übertragen wird, die in einem Fahrbereich angeordnet ist;
eine Erfassungseinheit (13), die konfiguriert ist, einen Zustand eines Magnetfelds an einem Punkt, an dem sich der Hauptkörper (10) befindet, zu erfassen; und
eine Steuereinrichtung (20), die konfiguriert ist, basierend auf einem Ergebnis des Empfangs durch die Empfangsvorrichtung (12), einem Ergebnis des Erfassens durch die Erfassungseinheit (13) und/oder einer vorher gespeicherten Bereichskarte das Fahren des Hauptkörpers (10) durch Steuern der Antriebseinheit (11) derart zu steuern, dass der Hauptkörper (10) in dem Fahrbereich fährt,
wobei die Steuereinrichtung (20) konfiguriert ist, das Erfassungsergebnis an einem Punkt zu analysieren, an dem sich der Hauptkörper (10) von der Ladestation (500) entfernt und sich um eine vorgegebene Entfernung bewegt, und basierend auf dem Empfangsergebnis während der Hauptkörper (10) in dem Fahrbereich fährt, eine Richtung zu bestimmen, in der sich die Ladestation (500) befindet, und basierend auf einem Ergebnis der Analyse und einem Ergebnis der Bestimmung den Hauptkörper (10) zu steuern, über den einen Punkt zu der Ladestation (500) zurückzukehren,
wobei die Steuereinrichtung (20) konfiguriert ist, dann, wenn die Steuereinrichtung (20) den Hauptkörper (10) steuert, zu der Ladestation (500) zurückzukehren, basierend auf dem Analyseergebnis und dem Bestimmungsergebnis den Hauptkörper (10) zu steuern, sich zu dem einen Punkt zu bewegen und von dem einen Punkt zu der Ladestation (500) zurückzukehren, und
wobei die Steuereinrichtung (20) konfiguriert ist, basierend auf dem Bestimmungsergebnis die Fahrtrichtung des Hauptkörpers (10) zu der Richtung umzuschalten, in der sich die Ladestation (500) befindet, und basierend auf dem Analyseergebnis den Hauptkörper (10) zu steuern, sich zu dem einen Punkt zu bewegen und von dort zu der Ladestation (500) zurückzukehren.

2. System (1) eines sich bewegenden Roboters nach Anspruch 1, wobei die mehreren Signalsensormodule (12a, 12b) an unterschiedlichen Positionen vorgesehen sind.

3. System (1) eines sich bewegenden Roboters nach Anspruch 2, wobei die mehreren Signalsensormodule (12a, 12b) in zueinander symmetrischen Positionen vorgesehen sind.

4. System (1) eines sich bewegenden Roboters nach Anspruch 1, wobei die Erfassungseinheit (13) konfiguriert ist, mindestens einen Sensor zu umfassen, der eine Richtung des Magnetfelds und/oder eine Stärke des Magnetfelds an dem Punkt, an dem sich der Hauptkörper (10) befindet, erfasst.

5. System (1) eines sich bewegenden Roboters nach Anspruch 4, wobei der mindestens eine Sensor einen Magnetfeldsensor umfasst.

6. System (1) eines sich bewegenden Roboters nach Anspruch 1, wobei die Steuereinrichtung (20) konfiguriert ist, den Hauptkörper (10) derart zu steuern, dass er sich um die vorgegebene Entfernung von der Ladestation (500) zurück bewegt und sich somit in einem derartigen Zustand an dem einen Punkt befindet, dass der Hauptkörper (10) auf die Ladestation (500) ausgerichtet ist, wenn sich der Hauptkörper (10) von der Ladestation (500) entfernt.

7. System (1) eines sich bewegenden Roboters nach Anspruch 1, wobei die Steuereinrichtung (20) konfiguriert ist, aus dem Erfassungsergebnis an dem einen Punkt eine Richtung des Magnetfelds entsprechend einer Fahrtrichtung des Hauptkörpers (10) zu analysieren.

8. System (1) eines sich bewegenden Roboters nach Anspruch 1, wobei die Steuereinrichtung (20) konfiguriert ist, basierend auf dem Empfangsergebnis, während der Hauptkörper (10) in dem Fahrbereich fährt, eine Richtung zu überprüfen, in der ein Empfangswinkel des Übertragungssignals einem vorgegebenen Kriterium entspricht, und die überprüfte Richtung als die Richtung bestimmt wird, in der sich die Ladestation (500) befindet.

9. System (1) eines sich bewegenden Roboters nach Anspruch 1, wobei die Steuereinrichtung (20) konfiguriert ist, basierend auf dem Analyseergebnis den Hauptkörper (10) derart zu steuern, dass er sich zu dem einen Punkt bewegt, und zu der Ladestation (500) zurückkehrt, indem sie an dem einen Punkt die Bewegungsrichtung zu der Richtung, in der sich die Ladestation (500) befindet, umschaltet.

10. System (1) eines sich bewegenden Roboters nach Anspruch 9, wobei die Steuereinrichtung (20) konfiguriert ist, dann, wenn die Steuereinrichtung (20) den Hauptkörper (10) derart steuert, dass er sich zu dem einen Punkt bewegt, das Erfassungsergebnis mit dem Analyseergebnis zu vergleichen, während sich der Hauptkörper (20) zu dem einen Punkt bewegt, und den Hauptkörper (10) derart zu steuern, dass er sich entsprechend einem Ergebnis des Vergleichs an dem einen Punkt befindet.

11. Verfahren zum Bewegen zu einer Ladestation (500) eines sich bewegenden Roboters (100), wobei der sich bewegende Roboter (100) Folgendes umfasst: einen Hauptkörper (10); eine Antriebseinheit (11), die den Hauptkörper (10) bewegt; eine Empfangsvorrichtung (12), die mehrere Signalsensormodule (12a, 12b) umfasst, die ein Übertragungssignal empfangen, das von einer Ladestation (500) übertragen wird, die in einem Fahrbereich angeordnet ist; eine Erfassungseinheit (13), die einen Zustand eines Magnetfelds an dem Punkt erfasst, an dem sich der Hauptkörper (10) befindet; und eine Steuereinrichtung (20), die basierend auf einem Ergebnis des Empfangs durch die Empfangsvorrichtung (12), einem Ergebnis des Erfassens durch die Erfassungseinheit (13) und/oder einer vorher gespeicherten Bereichskarte, das Fahren des Hauptkörpers (10) durch Steuern der Antriebseinheit (11) derart steuert, dass der Hauptkörper (10) in dem Fahrbereich fährt,
wobei das Verfahren Folgendes umfasst:
Bewegen (S10) um eine vorgegebene Entfernung durch Verlassen der Ladestation (500);
Analysieren (S20) des Erfassungsergebnisses an einem Punkt, zu dem sich der Hauptkörper (10) um die vorgegebene Entfernung bewegt;
Bestimmen (S30) einer Richtung, in der sich die Ladestation (500) befindet, basierend auf dem Empfangsergebnis, während der Hauptkörper (10) in dem Fahrbereich fährt;
Umschalten (S40) einer Fahrtrichtung in die Richtung, in der sich die Ladestation (500) befindet, basierend auf einem Ergebnis der Bestimmung;
Bewegen (S50) zu dem einen Punkt, basierend auf einem Ergebnis der Analyse des Erfassungsergebnisses;
Umschalten (S60) der Fahrtrichtung in die Richtung, in der sich die Ladestation (500) befindet, basierend auf dem Analyseergebnis; und
Bewegen (S70) von dem einen Punkt zu der Ladestation (500).

12. Verfahren nach Anspruch 1, wobei das Bewegen (S50) zu dem einen Punkt das Vergleichen des Erfassungsergebnisses mit dem Analyseergebnis umfasst, während sich der Hauptkörper (10) zu dem einen Punkt bewegt, und Bewegen zu dem einen Punkt entsprechend einem Ergebnis des Vergleichs.

## Revendications

1. Système de robot mobile (1) comportant :
une borne de charge (500) qui est agencée dans une zone de déplacement et est configurée pour transmettre un signal de transmission afin de déterminer des informations de position ; et
un robot mobile (100) comportant :
un corps principal (10) ;
une unité d'entraînement (11) qui est configurée pour déplacer le corps principal (10) ;
un récepteur (12) comportant une pluralité de modules de détection de signal(12a, 12b) qui sont configurés pour recevoir un signal de transmission transmis à partir d'une borne de charge (500) disposée dans une zone de déplacement ;
une unité de détection (13) qui est configurée pour détecter un état d'un champ magnétique à un point où le corps principal (10) se situe ; et
une commande (20) qui est configurée pour commander un déplacement du corps principal (10) en commandant l'unité d'entraînement (11) de sorte que le corps principal (10) se déplace dans la zone de déplacement, sur la base d'au moins un élément choisi parmi un résultat de la réception par le récepteur (12), un résultat de la détection par l'unité de détection (13) et une carte de zone pré-stockée,
dans lequel la commande (20) est configurée pour analyser le résultat de détection à un point auquel le corps principal (10) quitte la borne de charge (500) et se déplace sur une distance prédéterminée, et pour déterminer une direction dans laquelle la borne de charge (500) est située sur la base du résultat de réception pendant que le corps principal (10) se déplace dans la zone de déplacement, et pour commander au corps principal (10) de retourner à la borne de charge (500) via ce point sur la base d'un résultat de l'analyse et d'un résultat de la détermination,
dans lequel la commande (20), lorsque la commande (20) commande au corps principal (10) de retourner à la borne de charge (500), est configurée pour commander au corps principal (10) de se déplacer jusqu'au point et de retourner à partir de ce point jusqu'à la borne de charge (500), sur la base du résultat d'analyse et du résultat de détermination, et
dans lequel la commande (20) est configurée pour basculer la direction de déplacement du corps principal (10) vers la direction dans laquelle la borne de charge (500) est située, sur la base du résultat de détermination, et pour commander au corps principal (10) de se déplacer jusqu'au point et de revenir à la borne de charge (500) sur la base du résultat d'analyse.

2. Système de robot mobile (1) selon la revendication 1, dans lequel la pluralité de modules de détection de signal (12a, 12b) est agencée dans différentes positions.

3. Système de robot mobile (1) selon la revendication 2, dans lequel la pluralité de modules de détection de signal (12a, 12b) est agencée dans des positions symétriques les unes par rapport aux autres.

4. Système de robot mobile (1) selon la revendication 1, dans lequel l'unité de détection (13) est configurée pour comporter au moins un capteur qui détecte au moins un élément choisi parmi une direction du champ magnétique et une intensité du champ magnétique au point où le corps principal (10) est situé.

5. Système de robot mobile (1) selon la revendication 4, dans lequel le au moins un capteur comporte un capteur de champ magnétique.

6. Système de robot mobile (1) selon la revendication 1, dans lequel la commande (20) est configurée pour commander au corps principal (10) de se déplacer vers l'arrière sur la distance prédéterminée à partir de la borne de charge (500), et d'être ainsi situé au point dans un état tel que le corps principal (10) est dirigé vers la borne de charge (500), lorsque le corps principal (10) quitte la borne de charge (500).

7. Système de robot mobile (1) selon la revendication 1, dans lequel la commande (20) est configurée pour analyser une direction du champ magnétique en fonction d'une direction de déplacement du corps principal (10), à partir du résultat de détection à ce point.

8. Système de robot mobile (1) selon la revendication 1, dans lequel la commande (20) est configurée pour vérifier une direction dans laquelle un angle de réception du signal de transmission correspond à un critère prédéterminé, sur la base du résultat de réception pendant que le corps principal (10) se déplace dans la zone de déplacement, et la direction vérifiée est déterminée comme étant la direction dans laquelle la borne de charge (500) est située.

9. Système de robot mobile (1) selon la revendication 1, dans lequel la commande (20) est configurée pour commander au corps principal (10) de se déplacer jusqu'au point sur la base du résultat d'analyse, et de retourner à la borne de charge (500) en basculant la direction de déplacement vers la direction dans laquelle la borne de charge (500) est située à ce point.

10. Système de robot mobile (1) selon la revendication 9, dans lequel la commande (20), lorsque la commande (20) commande au corps principal (10) de se déplacer jusqu'au point, est configurée pour comparer le résultat de détection avec le résultat d'analyse pendant que le corps principal (10) se déplace jusqu'au point, et pour commander au corps principal (10) d'être situé à ce point en fonction d'un résultat de la comparaison.

11. Procédé de déplacement d'un robot mobile (100) jusqu'à une borne de charge (500), dans lequel le robot mobile (100) comporte : un corps principal (10) ; une unité d'entraînement (11) qui déplace le corps principal (10) ; un récepteur (12) comportant une pluralité de modules de détection de signal (12a, 12b) qui reçoivent un signal de transmission transmis à partir d'une borne de charge (500) disposée dans une zone de déplacement ; une unité de détection (13) qui détecte un état d'un champ magnétique à un point où le corps principal (10) se situe ; et une commande (20) qui commande un déplacement du corps principal (10) en commandant l'unité d'entraînement (11) de sorte que le corps principal (10) se déplace dans la zone de déplacement, sur la base d'au moins un élément choisi parmi un résultat de la réception par le récepteur (12), un résultat de la détection par l'unité de détection (13) et une carte de zone pré-enregistrée,
le procédé comportant les étapes consistant à :
se déplacer (S10) sur une distance prédéterminée en quittant la borne de charge (500) ;
analyser (S20) le résultat de détection à un point jusqu'auquel le corps principal (10) se déplace sur la distance prédéterminée ;
déterminer (S30) une direction dans laquelle la borne de charge (500) est située sur la base du résultat de réception pendant que le corps principal (10) se déplace dans la zone de déplacement ;
basculer (S40) une direction de déplacement vers la direction dans laquelle la borne de charge (500) se situe, sur la base du résultat de la détermination ;
se déplacer (S50) jusqu'à ce point sur la base d'un résultat de l'analyse du résultat de détection ;
basculer (S60) la direction de déplacement vers la direction dans laquelle la borne de charge (500) est située, sur la base du résultat d'analyse ; et
se déplacer (S70) à partir de ce point jusqu'à la borne de charge (500).

12. Procédé selon la revendication 11, dans lequel le déplacement (S50) jusqu'à ce point comporte de comparer le résultat de détection avec le résultat d'analyse pendant que le corps principal (10) se déplace jusqu'à ce point, et de se déplacer jusqu'à ce point en fonction d'un résultat de la comparaison.
